# EUROPÄISCHE PATENTSCHRIFT

(11) **EP 0 653 383 B1**
(45) Veröffentlichungstag und Bekanntmachung des Hinweises auf die Patenterteilung: **20.05.1998**
(21) Anmeldenummer: 94116152.3
(22) Anmeldetag: 13.10.1994
(51) Int. Cl.: C03B 37/027, C03B 37/029

(54) **Verfahren und Vorrichtung zur Herstellung einer optischen Faser**
Method and apparatus for drawing an optical fiber
Procédé et dispositif d'étirage d'une fibre optique

(30) Priorität: 16.11.1993 DE 4339077
(43) Veröffentlichungstag der Anmeldung: 17.05.1995
(73) Patentinhaber: ALCATEL ALSTHOM COMPAGNIE GENERALE D'ELECTRICITE, 75008 Paris (FR)
(72) Erfinder: Lysson, Hans-Jürgen, Dipl.-Ing., D-41352 Korschenbroich (DE); Lisse, Frank, Dr., D-50769 Köln (DE); Hahn, Manuela, D-41238 Mönchengladbach (DE); Leppert, Hans-Detlef, Dr., D-41189 Mönchengladbach (DE); Darbon, Philippe, F-91240 Saint Michel sur Orge (FR)
(74) Vertreter: Mende, Eberhard, Dipl.-Ing.

(56) Entgegenhaltungen:
- EP-A- 0 386 756
- US-A- 4 673 427

## Beschreibung

Die vorliegende Erfindung betrifft ein Verfahren zur Herstellung einer optischen Faser, bei dem die Faser aus dem einen Ende einer mindestens in diesem Bereich über der Glaserweichungstemperatur erwärmten Vorform gezogen und dabei die Vorform von einem Gas umströmt wird, dessen Strömungsrichtung der Faserziehrichtung entspricht und dessen Strömung oberhalb des Ziehbereiches der Faser weitgehend laminar verläuft.

Wegen der geringen äußeren Abmessungen der optischen Fasern ist eine unmittelbare Herstellung des geforderten Faserprofils aus unterschiedlichen Glassorten nicht möglich. Die Basis für die Herstellung einer optischen Faser bildet daher eine sogenannte Vorform mit einem Durchmesser im Zentimeterbereich, die je nach Art der Faser, z. B. Multimode-Gradienten- oder Einmodenfaser auf recht unterschiedlichem Wege hergestellt werden können. So sieht das sogenannte CVD-Verfahren beispielsweise die chemische Abscheidung aus der Gasphase im Innern eines Quarzglasrohres vor, das anschließend zur Vorform kollabiert wird das sogenannte OVD-Verfahren beschreibt die Abscheidung aus der Gasphase und die Außenbeschichtung eines Glaskerues, während das sogenannte VAD-Verfahren die axiale Beschichtung aus der Gasphase vorsieht

Glas ist ein amorpher Werkstoff, durch Erwärmen kann er in einen Zustand geringer Viskosität gebracht werden. Bei den Für die Faserherstellung heute üblichen Quarzgläsern tritt eine merkliche Erweichung des Glases erst ab ca. 1900 bis 2200 K auf. Die Glaserweichung bei entsprechender Temperatur wird benutzt, um die auf unterschiedliche Weise hergestellte Vorform zu einem Glasfaden geringer Dicke auszuziehen. Erwärmt wird zu diesem Zweck die Vorform in einem sogenannten Ziehofen, der beispielsweise ein Graphit-Widerstandsofen sein kann bei dem ein Heizelement unter Schutzgas durch geregelten, pulsierenden Gleichstrom oder Wechselstrom auf eine entsprechende Temperatur gebracht wird, oder auch ein Induktionsofen, bei den, ein Rohr aus z. B. Zirkonoxyd, Graphit, im elektromagnetischen Feld zum Glühen angeregt wird.

Der ring- oder rohrförmige Innenraum solcher bekannten Ziehofen hat bei den für die Faserherstellung benötigten Betriebstemperaturen durch Kaminwirkung eine Luft- oder Gasströmung durch das Ofeninnere zur Folge. Die örtlichen Gegebenheiten im Ofeninneren führen nach dem Einbringen der Vorform zu einer Turbulenz dieser Luft- oder Gasströmung, die ihrerseits nachteilige Einflüsse auf die Faserdämpfung und Faserfestigkeit hat. Hieran ändert sich auch nichts, wenn, wie bereits praktiziert (EP-A2-0 329 898), ein Schutzgas von oben her durch das Innere des Ziehofens geblasen wird oder, wie bekannt (EP-A1-0 386 756), ein Schutzgas zunächst in der Ofenwandung in Faserziehrichtung geleitet, erwärmt und oberhalb des Ziehbereiches gegen die Vorform gelenkt wird. Denn die Temperatur dieses Gases nimmt von dem einführungsseitigen oberen Bereich des Ofens bis etwa zur Mitte des Ziehbereiches, d. h. dem Entstehungsbereich der sogenannten Ziehzwiebel beim Ausziehen der Faser, zu, in dem daran anschließenden Bereich aber wieder ab. Gleichzeitig erfolgt in diesem Ziehzwiebelbereich in Abzugsrichtung der Faser eine Querschnittserweiterung gegenüber den, Ringspalt zwischen Vorformoberfläche und innerer Ofenwandung. Dies ist Ursache für ein Umschlagen der bis dahin weitgehend laminaren Strömung des von oben eingeführten Gases durch Abnahme der Strömungsgeschwindigkeit in eine turbulente Strömung gerade in dem sensitiven Faserziehbereich. In der laminaren Strömung mitgeführte Partikel lagern sich dabei auf der Ziehzwiebel bzw. der daraus gezogenen Faser ab, dort eingebrannte Partikel sind Ursache für spätere Faserbrüche oder für mögliche Fehler der Glasoberfläche bzw. auch der Faseroberfläche.

Daran ändert auch nichts eine weitere bekannte Maßnahme (US-A-4,673,427), bei der ein zusätzliches Gas außerhalb des Ziehofens in ein Führungsrohr eingeführt, am Ende dieses Rohres durch die Ofentemperatur erwärmt und das erwärmte Gas nunmehr mit gleicher Geschwindigkeit wie die Faser dieses Rohr in Abzugsrichtung durchströmt.

Der Erfindung liegt deshalb die Aufgabe zugrunde, Gasturbulenzen im Ofeninnenraum auszuschalten bzw. deren Einfluß auf ein für die Qualität der aus der Vorform gezogenen optischen Fasern unerhebliches Maß zu beschränken.

Diese Aufgabe wird bei dem eingangs geschilderten Verfahren gemäß der Erfindung dadurch gelöst, daß in die Strömung des die Vorform umgebenden Gases im Ziehbereich zusätzlich Spülgas eingesetzt wird welches diese Strömung stabilisiert. Dieses zusätzliche Spülgas, in den Ziehbereich eingeleitet, verhindert ein Ablösen der im Ringspalt zwischen äußerer Oberfläche Vorform und innerer Ofenwand im Grunde laminaren Strömung in dem durch die Ziehzwiebel sich ständig bis auf den Faserquerschnitt vergrößernden freien Durchtrittsquerschnitt für das von oben in den Ofenraum eingeführte Gas.

Zur Durchführung der Erfindung hat es sich als zweckmäßig erwiesen, das zusätzliche Spülgas quer zur Strömungsrichtung des die Vorform umgebenden Gases auf dieses auftreffen zu lassen. Eine andere vorteilhafte Möglichkeit ist die, das zusätzliche Spülgas mit einer Axialkomponente in den Ziehbereich einströmen zu lassen, wobei im Extremfall die Radialkomponente zu Null wird.

Aus diesen, Grunde hat es sich in Durchführung der Erfindung als besonders vorteilhaft erwiesen, wenn das zusätzliche Spülgas in Gegenrichtung zur Strömungsrichtung des die Vorform umgebenden Gases im Ofenraum geführt wird. Vorteilhaft wird dabei das zusätzliche Spülgas zunächst in Gegenrichtung zur Strömungsrichtung des die Vorform umgebenden Gases geführt und im Ziehbereich, d. h. im Bereich der durch den Ziehvorgang an dem unteren Ende der Vorform entstehenden Ziehzwiebel, in Faserziehrichtung umgelenkt.

Das zusätzliche Spülgas hat erfindungsgemäß eine Stabilisierung des in Ziehrichtung in den Ofenraum geführten Gases zur Folge. Die Strömungsgeschwindigkeit des zusätzlichen Spülgases ist daher so zu wählen, daß zwar der Stabilisierungseffekt erreicht, aber keine zusätzlichen Störimpulse auf das strömende Gas ausgeübt werden. Aus diesem Grunde wird man in Weiterführung des Erfindungsgedankens die Strömungsgeschwindigkeit des zusätzlichen Spülgases höchstens gleich der Strömungsgeschwindigkeit des die Vorform in Faserziehrichtung umgebenden Gasstromes wählen.

Zur Durchführung des Verfahrens nach der Erfindung dient ein senkrecht angeordneter Ziehofen, dessen die Vorform umgebende zylindrische Wandung aufgeheizt ist. Bekannt sind zu diesem Zweck sogenannte Induktionsöfen zum Erwärmen der Glasvorform für das Ziehen optischer Fasern, die aus einem inneren Heizrohr aus elektrisch leitfähigen hochtemperaturbeständigen Werkstoffen, beispielsweise auf Basis von Graphit, zur Aufnahme der Glasvorform bestehen, einer nach außen anschließenden Wärmeisolierung sowie einem Quarzglasrohr, das von einer Induktionsspule umgeben ist. In einem solchen Ziehofen sind Mittel vorgesehen zur Einführung eines Gases von oben her in der Faserziehrichtung. In einer Ausführungsform der Erfindung ist diese Ziehofen dadurch gekennzeichnet, daß zur Erzielung einer laminaren Strömung der Spülgase im die Vorform und die daraus gezogene Faser aufnehmenden Ofenraum zur Einführung einer zusätzlichen Spülgaskomponente die umgebende Wandung im Ziehbereich der Vorform zusätzliche, vorzugweise am Umfang Verteilte Gaseinführungsdüsen aufweist. In einer anderen Ausführungform der Erfindung ist diese Ziehofen dadurch gekennzeichnet, daß von unten her in den Ofenraum ein die bereits ausgezogene Faser konzentrisch umgebendes Führungsrohr hineinragt, das sich bis in den Ziehbereich hinein erstreckt und dessen Außenfläche mit der umgebenden Wandung des Ziehofens einen Ringspalt für das zusätzliche Spülgas bildet. Dieses Führungsrohr hat den weiteren Effekt einer zusätzlichen Temperierung der geradeausgezogenen Faser, bevor diese am ausgangsseitigen Ende des Ziehofens den Ofeninnenraum verläßt.

Da es, wie ausgeführt, für die Erfindung auf die Stabilisierung der Gasströmung im Ziehbereich ankommt, wird man vorteilhaft die axiale Länge des Führungsrohres so wählen, daß dieses bis in den Ziehbereich hineinragt. Da es damit auch vom Hochtemperaturbereich erfaßt wird, wird man vorteilhaft das Führungsrohr aus dem gleichen Material wie die umgebende Rohrwandung wählen, beispielsweise aus Graphit.

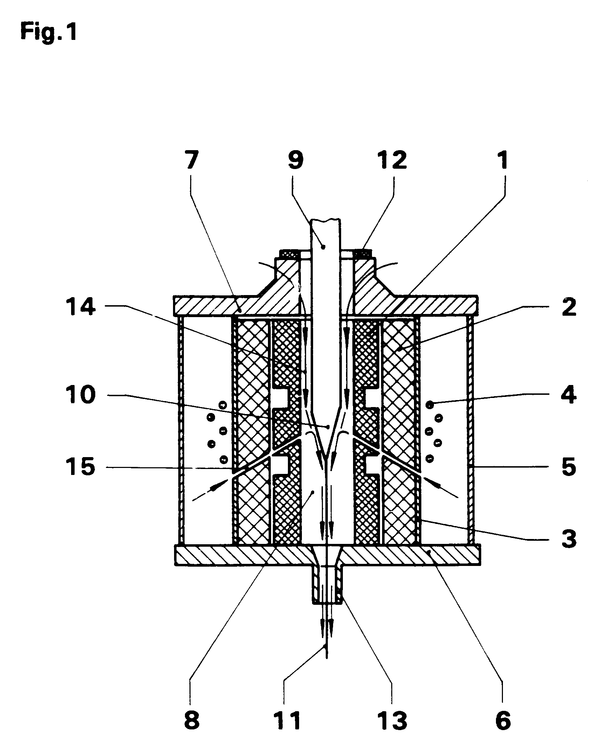

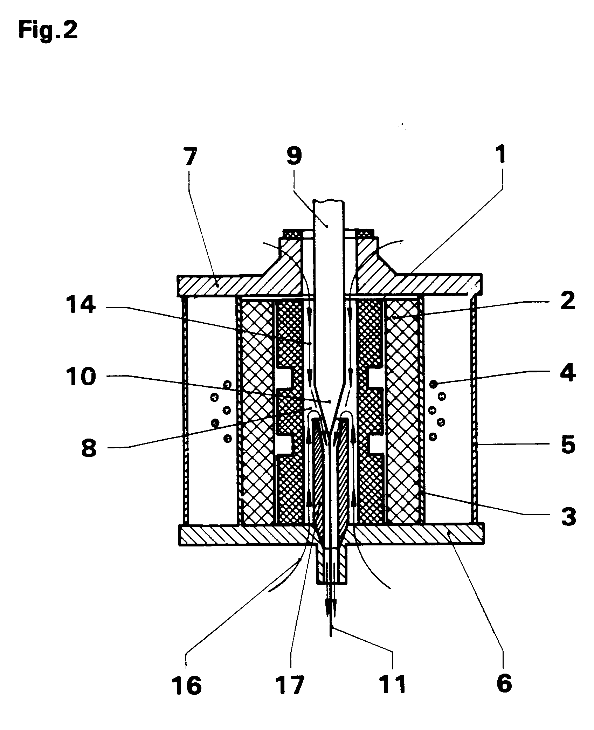

Die Erfindung sei anhand der in den Figuren 1 und 2 dargestellten Ausführungsformen der Erfindung näher erläutert.

Der in der Fig. 1 schematisch dargestellte Ziehofen besteht aus dem zylinderförmigen Suszeptor 1, einer nach außen anschließenden ebenfalls zylinderförmigen Isolierung 2 sowie einem Quarzrohr 3. Der Suszeptor 1 und die Isolierung 2 sind im dargestellten Ausführungsbeispiel aus Graphit hergestellt, der als Heizrohr wirkende Suszeptor kann aber auch z. B. aus einem mit Yttrium stabilisierten Zirkonoxyd bestehen. Dabei ist das Heizrohr als kurzgeschlossene Wicklung für die Induktionsspule 4 anzusehen. Nach außen abgeschlossen ist der Ziehofen durch eine konzentrische Außenwand 5 sowie die flanschartige Bodenplatte 6 und den Ofendeckel 7.

Durch den Ofendeckel 7 in den Ofenraum 8 eingeführt ist die Vorform 9 aus der, wie dargestellt, nach entsprechender Erwärmung des unteren Endes in Form einer Ziehzwiebel 10 die Faser 11 ausgezogen wird. Zur Abdichtung des Ofenraumes 8 im Deckelbereich dient eine Dichtung 12, die Bodenplatte 6 läuft in einem Flansch 13 aus. Wie durch Pfeile angedeutet, erfolgt durch nichtdargestellte Düsen im Ofendeckel 7 die Einführung eines Schutzgases, beispielsweise Argon, Stickstoff oder dergleichen, mit laminarer Strömung wird die Vorform 9 von diesem Gasstrom in Ziehrichtung der Faser umspült. Im Hochtemperaturbereich des Ofens, das ist der Bereich, in dem durch Ausziehen der Faser 11 die Ziehzwiebel 10 gebildet wird, nimmt die Temperatur des eingeführten Gases zu, gleichzeitig wächst auch, durch den abnehmenden Querschnitt der Vorform im Ziehbereich bedingt, der freie Querschnitt des Ofenraumes, so daß Turbulenzen beginnend in diesem Bereich während des Betriebes unerläßlich sind. Da diese Turbulenzen mit der damit verbundenen Gefahr einer Kontamination der Glasoberflächen verbunden ist, sieht die Erfindung die Einführung eines zusätzlichen Spülgases in diesen Bereich vor, um den die Vorform umgebenden Gasstrom 14 an einem Abheben zu hindern und damit zu stabilisieren. Um das zu erreichen, sind zusätzliche Gasführungskanäle 15 vorgesehen, die, vorteilhaft am Umfang der Vorform verteilt, das zusätzliche Spülgas radial in den Ofenraum hineinführen.

Eine andere vorteilhafte Ausführungsform zur Durchführung des Verfahrens nach der Erfindung zeigt die Fig. 2. Der Ofenaufbau selbst entspricht im wesentlichen dem der in der Fig. 1 dargestellten Ausführungsform. Mit 1 ist wiederum der Suszeptor bezeichnet, 2 ist die in konzentrischer Anordnung nachfolgende Isolierung, 3 ist das umgebende Quarzglasrohr. Die Induktionswicklung zum Aufheizen des als Heizrohr wirkenden Suszeptors 1 ist wiederum mit 4 bezeichnet, 5 ist die konzentrische Außenwandung, 6 die Bodenplatte und 7 der Ofendeckel des erfindungsgemäß weitergebildeten Ziehofens.

Auch in diesem Fall ist wiederum eine Vorform 9 von oben her in den Ofenraum 8 eingeführt, aus der Ziehzwiebel 10 wird nach Überführung des Glasmaterials der Vorform 9 in den schmelzflüssigen Zustand die Faser 11 gezogen. Um zu vermeiden, daß das ebenfalls von oben durch nichtdargestellte Zuführungsdüsen eingeführte Gas 14 im Ziehzwiebelbereich aus der laminaren Strömung in eine turbulente Strömung übergeht, wird entgegen der Strömungsrichtung dieses Gases von unten her ein zusätzliches Spülgas 16 eingebracht, das den durch die Querschnittsverminderung der Vorform bedingten Ofenraum erfüllt und damit an dieser Stelle den gesamten Spülgasstrom stabilisiert.

Eine besonders zweckmäßige Möglichkeit zum Einführen des zusätzlichen Spülgases 16 ist in der Fig. dargestellt, hier ist von unten in den Ofenraum ein zusätzliches Führungsrohr 17, beispielsweise aus Graphit, eingeführt, es reicht mit seinen äußeren Abmessungen in den Ziehbereich, d. h. in den Hochtemperaturbereich des Ofens hinein. Das zusätzliche Spülgas 16 wird an dem oberen Ende durch das von oben kommende Gas 14 umgelenkt und im Innern des Führungsrohres 17, praktisch die Faser 11 umhüllend, nach unten geleitet. Durch die zusätzliche Spülgasmenge ist der im Ziehbereich vergrößerte freie Querschnitt im Ofenraum mit dem Spülgas ausgefüllt, die Entstehung von Turbulenzen ist vermieden.

Die Erfindung ist auf die dargestellten Ausführungsbeispiele, soweit hier eine konkrete Ausführungsform des Ofens vorgegeben ist, nicht beschränkt. So ist die Erfindung auf beliebige Ziehöfen für den vorgegebenen Zweck anwendbar, bei denen Schutz- oder Spülgase durch den Ofeninnenraum geführt werden.

## Patentansprüche

1. Verfahren zur Herstellung einer optischen Faser (11), bei dem die Faser (11) aus dem einen Ende einer mindestens in diesem Bereich über der Glaserweichungstemperatur erwärmten Vorform (9) gezogen und dabei die Vorform (9) von einem Gas umströmt wird, dessen Strömungsrichtung der Faserziehrichtung entspricht und dessen Strömung oberhalb des Ziehbereiches der Faser weitgehend laminar verläuft, dadurch gekennzeichnet, daß die Strömung des die Vorform (9) umgebenden Gases im Ziehbereich durch ein zusätzliches Spülgas stabilisiert wird.

2. Verfahren nach Anspruch 1, dadurch gekennzeichnet, daß das zusätzliche Spülgas quer zur Strömungsrichtung des die Vorform (9) umgebenden Gases geführt wird.

3. Verfahren nach Anspruch 1, dadurch gekennzeichhet, daß das zusätzliche Spülgas in Gegenrichtung zur Strömungsrichtung des die Vorform (9) umgebenden Gases geführt wird.

4. Verfahren nach Anspruch 3, dadurch gekennzeichnet, daß das zusätzliche Spülgas ein zunächst in Gegenrichtung zur Strömungsrichtung des die Vorform (9) umgebenden Gases geführt und im Ziehbereich (10) in Faserziehrichtung umgelenkt wird.

5. Verfahren nach Anspruch 1 oder einen, der folgenden, dadurch gekennzeichnet, daß als zusätzliches Spülgas Luft, Stickstoff oder ein Inertgas verwendet wird.

6. Verfahren nach Anspruch 1 oder einen, der folgenden, dadurch gekennzeichnet, daß die Strömungsgeschwindigkeit des zusätzlichen Spülgases höchstens gleich der Strömungsgeschwindigkeit des die Vorform (9) in Faserziehrichtung umgebenden Gasstromes ist.

7. Vorrichtung zur Durchführung des Verfahrens nach Anspruch 1 oder einem der folgenden bei dem die Erwärmung der Vorform (9) in einem senkrecht angeordneten Ziehofen erfolgt, dessen die Vorform (9) umgebende zylindrische Wandung (1) aufgeheizt ist und Mittel zur Einführung eines Gases von oben her in Faserziehrichtung vorgesehen sind, welches die Vorform (9) umströmt, dadurch gekennzeichnet, daß die umgebende Wandung (1) im Ziehbereich der Vorform (9) zusätzliche, vorzugsweise an` Umfang verteilte Gaseinführungsdüsen (15) aufweist.

8. Vorrichtung zur Durchführung des Verfahrens nach Anspruch 1 oder einem der folgenden, bei dem die Erwärmung der Vorform (9) in einem senkrecht angeordneten Ziehofen erfolgt, dessen die Vorform (9) umgebende zylindrische Wandung (1) aufgeheizt ist und Mittel zur Einführung eines Gases von oben her in Faserziehrichtung vorgesehen sind, welches die Vorform (9) umströmt, dadurch gekennzeichnet, daß in den Ofenraum (8) von unten ein die gezogene Faser (11) konzentrisch umgebendes Führungsrohr (17) hineinragt, das sich bis in den Ziehbereich hinein erstreckt und dessen Außenfläche mit der umgebenden Wandung (1) des Ziehofens einen Ringspalt für das zusätzliche Spülgas bildet.

9. Vorrichtung nach Anspruch 8, dadurch gekenzeichnet, daß das Führungsrohr (17) aus einem hochtemperaturbeständigen Material besteht.

10. Vorrichtung nach Anspruch 8 oder 9 mit einer inneren, die Vorform (9) umgebenden Graphitauskleidung (1) des Ziehofens, dadurch gekennzeichnet, daß das Führungsrohr (17) ebenfalls aus Graphit besteht.

## Claims

1. Method for producing an optical fibre (11), in which the fibre (11) is drawn out of one end of a preform (9), which is heated at least in this region to above the glass softening point, while a gas flows around the preform (9), the flow direction of which gas corresponds to the fibre drawing direction and the flow of which above the fibre drawing region is largely laminar, characterised in that the flow of gas surrounding the preform (9) is stabilised in the drawing region by an additional circulation gas.

2. Method according to claim 1, characterised in that the additional circulation gas is conveyed transversely to the flow direction of the gas surrounding the preform (9).

3. Method according to claim 1, characterised in that the additional circulation gas is conveyed in the direction opposite to the flow direction of the gas surrounding the preform (9).

4. Method according to claim 3, characterised in that the additional circulation gas is initially conveyed in the direction opposite to the flow direction of the gas surrounding the preform (9) and deflected in the fibre drawing direction in the drawing region (10).

5. Method according to claim 1 or one of the following claims, characterised in that air, nitrogen or an inert gas is used as the additional circulation gas.

6. Method according to claim 1 or one of the following claims, characterised in that the flow speed of the additional circulation gas is at most equal to the flow speed of the gas stream surrounding the preform (9) in the fibre drawing direction.

7. Apparatus for carrying out the method according to claim 1 or one of the following claims, in which the preform (9) is heated in a perpendicularly disposed drawing furnace, whose cylindrical wall (1) surrounding the preform (9) is heated, and means are provided for introducing a gas from above in the fibre drawing direction, which gas flows around the preform (9), characterised in that the surrounding wall (1) comprises in the drawing region of the preform (9) additional gas introduction nozzles (15), preferably distributed over the circumference.

8. Apparatus for carrying out the method according to claim 1 or one of the following claims, in which the preform (9) is heated in a perpendicularly disposed drawing furnace, whose cylindrical wall (1) surrounding the preform (9) is heated, and means are provided for introducing a gas from above in the fibre drawing direction, which gas flows around the preform (9), characterised in that a guide tube (17) concentrically surrounding the drawn fibre (11) projects from below into the furnace chamber (8), which tube extends into the drawing region and the external surface of which forms with the surrounding wall (1) of the drawing furnace an annular gap for the additional circulation gas.

9. Apparatus according to claim 8, characterised in that the guide tube (17) consists of a material which is resistant to high temperatures.

10. Apparatus according to claim 8 or 9 with an internal graphite lining (1), which surrounds the preform (9), of the drawing furnace, characterised in that the guide tube (17) also consists of graphite.

## Revendications

1. Procédé de fabrication d'une fibre optique (11), dans lequel la fibre (11) est étirée depuis l'extrémité d'une ébauche (9) portée au moins dans cette zone à une température supérieure à la température de ramollissement du verre et dans lequel l'ébauche (9) est entourée d'un flux de gaz dont la direction correspond à celle de l'étirage et dont l'écoulement reste laminaire au dessus de la zone d'étirage de la fibre, caractérisé par le fait que le flux de gaz entourant l'ébauche (9) est stabilisé dans la zone d'étirage par un gaz de rinçage supplémentaire.

2. Procédé selon la revendication 1, caractérisé par le fait que le gaz de rinçage supplémentaire est injecté perpendiculairement à la direction du flux de gaz qui entoure l'ébauche (9).

3. Procédé selon la revendication 1, caractérisé par le fait que le gaz de rinçage supplémentaire est injecté à contrecourant du flux de gaz qui entoure l'ébauche (9).

4. Procédé selon la revendication 3, caractérisé par le fait que le gaz de rinçage supplémentaire est injecté tout d'abord à contre-courant du flux de gaz qui entoure l'ébauche (9) puis est dévié dans le sens de la fibre étirée dans la zone d'étirage (10).

5. Procédé selon la revendication 1 ou une des suivantes, caractérisé par le fait que le gaz de rinçage supplémentaire utilisé est de l'air, de l'Azote ou un gaz inerte.

6. Procédé selon la revendication l ou une des suivantes, caractérisé par le fait que la vitesse du flux de gaz supplémentaire est au plus égal à la vitesse, dans le sens de l'étirage, du flux qui entoure l'ébauche (9).

7. Dispositif pour l'exécution du procédé de la revendication 1 ou une des suivantes, dans lequel le chauffage de l'ébauche (9) est réalisée dans un four d'étirage vertical dont la paroi (1) cylindrique qui entoure l'ébauche (9) est chauffée et dans lequel des moyens sont prévus pour l'injection d'un gaz supplémentaire par le haut dans le sens de l'étirage de la fibre et qui entoure l'ébauche (9), caractérisé par le fait que la paroi (1) qui entoure présente dans la zone d'étirage de l'ébauche (9) des buses (15) d'injection de gaz supplémentaires, de préférence réparties sur toute la périphérie.

8. Dispositif pour l'exécution du procédé de la revendication 1 ou une des suivantes, dans lequel le chauffage de l'ébauche (9) est réalisée dans un four d'étirage vertical dont la paroi (1) cylindrique qui entoure l'ébauche (9) est chauffée et dans lequel des moyens sont prévus pour l'injection d'un gaz supplémentaire par le haut dans le sens de l'étirage de la fibre et qui entoure l'ébauche (9), caractérisé par le fait que dans l'espace du four (8) un tube de guidage (17) est intégré, entourant la fibre (11) à partir du bas de manière concentrique et se prolongeant jusque dans la zone d'étirage, et dont la surface extérieure forme avec la paroi (1) du four d'étirage une section annulaire pour le gaz de rinçage.

9. Dispositif selon la revendication 8, caractérisé par le fait que le tube de guidage (17) est constitué d'un matériau résistant aux hautes températures.

10. Dispositif selon les revendications 8 ou 9 comportant un habillage (1) intérieur du four, en graphite, entourant l'ébauche (9) caractérisé par le fait que le tube de guidage (17) est également en graphite.
